# FASCICULE DE BREVET EUROPEEN

(11) **EP 0 655 124 B1**
(45) Date de publication et mention de la délivrance du brevet: **17.11.1999**
(21) Numéro de dépôt: 94918908.8
(22) Date de dépôt: 10.06.1994
(51) Int. Cl.: G01D 5/26, G01K 5/48

(54) **CAPTEUR A FIBRE OPTIQUE RECONFIGURABLE**
WIEDERKONFIGURIERBARER FASEROPTISCHER SENSOR
RECONFIGURABLE OPTICAL FIBRE SENSOR

(30) Priorité: 15.06.1993 FR 9307185
(43) Date de publication de la demande: 31.05.1995
(73) Titulaire: THOMSON-CSF, 75008 Paris (FR)
(72) Inventeur: BONNIAU, Philippe, F-92402 Courbevoie Cédex (FR); CHAZELAS, Jean, F-92402 Courbevoie Cédex (FR); TURPIN, Marc, F-92402 Courbevoie Cédex (FR)
(74) Mandataire: Chaverneff, Vladimir
(86) Numéro de dépôt international: FR9400690
(87) Numéro de publication internationale: WO9429674

(56) Documents cités:
- DE-A- 4 011 440
- JP-A- 59 203 929
- PATENT ABSTRACTS OF JAPAN vol. 12, no. 178 (P-708) 26 Mai 1988 & JP,A,62 288 538 (SUMITOMO ELECTRIC IND LTD) 15 Décembre 1987
- PATENT ABSTRACTS OF JAPAN vol. 5, no. 177 (P-089) 13 Novembre 1981 & JP,A,56 107 137 (TOKYO SHIBAURA DENKI K.K.) 25 Août 1981

## Description

La présente invention se rapporte à un capteur à fibre optique reconfigurable.

Les capteurs de température ou de contraintes à fibres optiques ont fait l'objet de nombreuses études dans le monde. Le domaine des capteurs intrinsèques de température ou de contraintes s'est particulièrement développé grâce à l'utilisation de la fibre optique comme capteur (utilisation de fibres optiques à haute biréfringence ou à maintien de polarisation).

La réalisation de capteurs optiques distribués le long de la fibre biréfringente a permis de disposer de N capteurs élémentaires correspondant à N segments de fibre capteur. Ces différents segments sont définis par utilisation de points de couplage servant de marqueurs (délimitant ces segments).

La réalisation de points de couplage sur des fibres optiques a été longuement étudiée et on dispose aujourd'hui de différentes techniques de réalisation, parmi lesquelles :
- l'épissurage de deux tronçons de la même fibre, c'est-à-dire une coupure de la fibre et le collage des deux morceaux après avoir fait toumer un des morceaux de la fibre d'un angle quelconque. Les principaux inconvénients de cette méthode sont l'introduction de pertes dues aux réflexions sur les faces des fibres, la maîtrise de l'alignement et de la rotation des coeurs de fibre (de diamètre de l'ordre de 5 µm),
- la fusion de la fibre par échauffement localisé. Un tronçon de la fibre biréfringente de longueur choisie est maintenu à ses extrémités, on toume la fibre à une extrémité, l'autre restant fixe. On crée ainsi une contrainte de torsion. Par échauffement localisé de la fibre, on réalise ainsi un point de couplage de polarisation. Les inconvénients de cette méthode sont l'utilisation d'une fibre localement dénudée, d'un générateur haute tension et d'un arc électrique pour créer le ou les points de couplage et l'irréversibilité de la méthode de création des points de couplage;
- la réalisation de réseaux d'indice dans la fibre par une méthode de masquage ou par une méthode holographique. La réalisation de points de couplage par cette méthode est principalement étudié aujourd'hui par la Société BERTIN et de nombreuses études ont porté sur la réalisation de réseaux d'indice dans les fibres pour des applications à des capteurs. L'inconvénient de cette méthode réside dans sa complexité de mise en oeuvre, la nécessité d'utiliser un laser supplémentaire de haute puissance pour produire les réseaux d'indice, et la nécessité de mettre en oeuvre un procédé de masquage de la fibre.

On connaît d'après le document allemand DE-A-40 11 440 un capteur de température à fibre optique sur laquelle un élément, qui peut être en alliage à mémoire de forme, applique une contrainte longitudinale déformant en "U" cette fibre. Ce capteur ne permet de réaliser que la mesure d'une seule température et ne permet pas de localiser précisément l'endroit où s'est produite la contrainte induite par le changement de température mesuré. De plus, la déformation produite par l'élément en AMF n'est pas réversible.

La présente invention a pour objet un capteur à fibre optique biréfringente tel que l'on puisse former de façon réversible un ou plusieurs points de couplage précisément localisés sur cette fibre sans l'endommager ou la couper, sans introduire des pertes, sans avoir recours à des équipements supplémentaires, et ce, de la façon la plus simple possible, ce capteur permettant de réaliser, en plusieurs points localisés précisément, des mesures de contraintes pouvant avoir des origines différentes, les emplacements des points de mesure pouvant être facilement modifiables.

On connait d'après le document JP59-203929 un dispositif de détermination de franchissement de seuil de température à fibre optique sur laquelle est disposé un élément en AMF, la mesure étant une mesure de pertes. Un tel dispositif ne permet pas de disposer un grand nombre d'élements en AMF sur la fibre, ni d'en connaitre l'emplacement avec précision.

Le capteur conforme à l'invention, du type à fibre optique dont au moins une partie fait office de capteur de grandeur physique se traduisant par une contrainte exercée sur la fibre, cette fibre optique coopérant avec une source de lumière et un dispositif de lecture optique, comporte un élément en alliage à mémoire de forme disposé sur la fibre optique, cet élément à mémoire de forme étant dimensionné et éduqué de façon que lorsqu'il est porté à des températures situées d'une part de la température de transition du matériau le constituant, il n'exerce pratiquement aucune contrainte sur la fibre, et que lorsqu'il est porté à des températures situées d'autre part de ladite température de transition, il exerce sur la fibre une contrainte mesurable par ledit dispositif de lecture, et il est caractérisé par le fait que la fibre optique est une fibre à haute biréfringence, qu'il comporte plusieurs éléments en alliage à mémoire de forme répartis sur la fibre optique, que la mesure effectuée par le dispositif de lecture optique est une mesure interférométrique ou polarimétrique et que la contrainte que ces éléments exercent sur la fibre est une contrainte radiale quasi isotrope.

Selon une autre caractéristique de l'invention, au moins une partie des éléments en AMF est fixée sur une structure dont on mesure les déformations, et la fibre optique est tendue entre des éléments définissant les zones de mesure.

La présente invention sera mieux comprise à la lecture de la description détaillée de plusieurs modes de réalisation, pris à titre d'exemples non limitatifs et illustrés par le dessin annexé, sur lequel :
- la figure 1 est un bloc-diagramme d'un dispositif capteur conforme à l'invention ;
- la figure 2 est une vue d'un tronçon de la fibre optique de la figure 1, muni d'un élément en alliage à mémoire de forme conforme à l'invention, montrant, en l'absence de contrainte sur cette fibre, les directions de la polarisation de l'énergie lumineuse d'entrée et de celle de sortie ;
- la figure 3 est une vue du tronçon de fibre optique de la figure 2, lorsque ledit élément exerce une contrainte sur la fibre et montrant les directions de la polarisation de l'énergie lumineuse d'entrée et des polarisations de l'énergie lumineuse de sortie ;
- la figure 4 est un schéma simplifié d'un capteur de l'invention pour la mesure d'allongements.

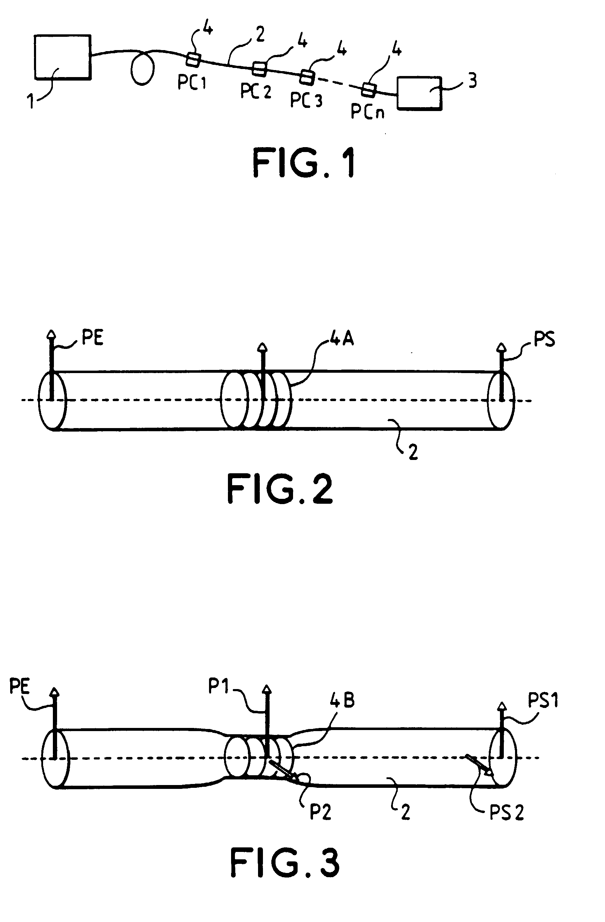

Le capteur à fibre optique schématisé en figure 1 permet de mesurer, de façon connue en soi, des contraintes de pression appliquées sur différents tronçons de fibre délimités par des points de couplage PC1, PC2, .... De plus, il permet de mesurer des températures (avec une précision relativement peu élevée, mais suffisante dans certains domaines d'application où la température ne constitue pas un paramètre critique) grâce à l'invention. Ainsi, l'invention permet de tenir compte de l'influence de la température sur les mesures de contraintes. En effet, des variations de température de la fibre provoquent une variation de longueur de celle-ci. Or, les mesures interférométriques effectuées avec la fibre optique reposent sur la détermination de l'emplacement de pics d'interférences, emplacement qui varie si la longueur de la fibre varie.

Le dispositif de l'invention permet de déterminer simplement, comme décrit ci-dessous, des températures sans utiliser d'appareillages conventionnels de mesure de température, donc de corriger, le cas échéant, les mesures de contraintes effectuées, et ce, même si l'on n'a pas accès à l'endroit où est disposée la fibre (pour y introduire un capteur de température classique).

Le dispositif capteur de la figure 1 comporte essentiellement une source 1, par exemple une source laser, dont l'énergie lumineuse est injectée dans une extrémité d'une fibre optique monomode biréfringente 2 dont l'autre extrémité est couplée à un dispositif interférométrique de lecture 3. La fibre 2 est du type à maintien de polarisation ou à haute biréfringence, par exemple du type FASE. Les éléments 1 et 3 étant bien connus en soi, ne seront pas décrits.

En général, la fibre 2 sert de multicapteurs. A cet effet, elle est délimitée en tronçons par des points de couplage. Au lieu de réaliser les points de couplage selon l'un des procédés connus décrits ci-dessus en préambule, l'invention prévoit de les réaliser de façon facilement réversible, ce qui permet, principalement, de reconfigurer l'arrangement des capteurs (pour en supprimer ou en ajouter, ou pour en déplacer un ou plusieurs) sans endommager la fibre. Selon l'invention, chaque point de couplage est réalisé à l'aide d'un élément 4 en alliage à mémoire de forme (AMF).

Ces matériaux AMF sont étudiés depuis de nombreuses années, dans le monde (voir en particulier l'article "Shape Memory Alloys" paru dans Scientific American, les publications "Shape Memory Alloys: materials in action" et "General discussions: the use of Shape Memory Actuators" de l'Université Catholique de Louvain).

Les matériaux principalement utilisés sont de type Ni-Ti ou des alliages de cuivre de type Cu-Al-Ni ou Cu-Al-Zn et l'effet mémoire est basé sur une transition de type martensitique-austénitique obtenue en faisant varier la température de l'alliage étudié, et cet effet est associé à un changement de forme de l'alliage.

La plage de températures de transition varie d'un type d'alliage à l'autre et est généralement située entre -100 et +200°C. Deux types mémoire sont à distinguer: l'effet mémoire simple sens et l'effet mémoire double sens. L'effet mémoire double sens correspond au passage réversible d'une forme haute température à une tonne basse température, par un simple changement de température. L'effet simple sens ne correspond qu'à la mémorisation d'une seule forme. Le matériau retrouve alors la forme qu'il avait dans sa phase martensitique avant déformation mécanique. La réalisation de ressorts, de fils, de plaques en alliages à mémoire de forme a trouvé de nombreuses applications dans tous les domaines allant de la chirurgie dentaire à l'automobile en passant par les appareils ménagers (quelques applications potentielles identifiées sont regroupées dans l'article de M. van Humbeek: "From a seed to a need : the growth of shape memory applications in Europe").

Selon l'invention, on réalise chaque point de couplage PC1, PC2, ... à l'aide d'un élément en AMF. De préférence, cet élément est du type à effet mémoire double sens, et exerce, dans l'une de ses formes mémorisées (à haute ou à basse température) une contrainte quasi isotrope dans un plan sensiblement perpendiculaire à l'axe de la fibre.

Selon un mode de réalisation préféré de l'invention, l'élément en AMF est annulaire. Selon un autre mode de réalisation préféré, il est tubulaire, ou bien en forme d'hélice tubulaire. Le diamètre intérieur de l'anneau ou de l'hélice est choisi, pour l'une des formes mémorisées, égal ou légèrement supérieur au diamètre extérieur de la fibre. Ce diamètre extérieur de la fibre est généralement compris entre 100 µm environ (par exemple pour une fibre à maintien de polarisation à revêtement époxy-acrylate) et quelque millimètres (par exemple une fibre de type FASE à gaine de protection supplémentaire en PTFE). L'alliage AMF et le diamètre du fil utilisé pour réaliser l'anneau ou l'hélice sont choisis de façon que pour l'autre forme mémorisée l'élément en AMF exerce sur la fibre 2 une contrainte suffisamment importante pour pouvoir être détectée par le lecteur 3, sans toutefois dépasser la limite élastique de déformation de la silice constituant la fibre. Dans le cas où il y aurait un tel risque, on peut munir la fibre d'un manchon protecteur (par exemple en matière plastique ou en PTFE) à l'endroit où l'on va disposer l'élément en AMF. Bien entendu, dans un tel cas, le diamètre intérieur de l'anneau ou de l'hélice tient compte de l'épaisseur de ce manchon.

L'anneau ou l'hélice peut être conformé soit avant son installation autour de la fibre, soit directement enroulé sur la fibre optique. Dans le premier cas, l'anneau, ou l'hélice, formée de quelques spires, généralement jointives, de fil en AMF, est glissé(e) le long de la fibre optique jusqu'à la position désirée. Dans le deuxième cas, le fil en AMF est enroulé ou bobiné (avantageusement par la technique dite de "Wrapping") autour de la fibre optique à la position désirée. Dans les deux cas, l'installation de l'élément en AMF est effectuée à la température pour laquelle l'élément en AMF a sa forme "dilatée" (forme correspondant à un anneau ou à une hélice de diamètre intérieur égal ou supérieur au diamètre extérieur de la fibre). Généralement, l'élément en AMF est tel que sa forme "dilatée" est obtenue lorsqu'il est porté à une température inférieure à la température de transition de l'AMF. Cette température de transition peut être choisie entre -100°C et +200°C environ en fonction de l'alliage utilisé, et dans ce cas général, elle est choisie inférieure à la plage de températures de fonctionnement prévue pour l'application. Toutefois, il est bien entendu que le cas inverse (forme "dilatée" correspondant à des températures supérieures à la température de transition de l'AMF) peut être envisagé. Ainsi, comme représenté en figure 2, lorsque l'élément 4A en AMF est dans sa forme "dilatée", la polarisation PS de la lumière en aval de l'élément 4A a la même direction que la polarisation PE en amont de l'élément 4A.

Au-dessus de la température de transition, le diamètre de l'anneau ou de l'hélice diminue, créant ainsi une contrainte quasi isotrope sur la fibre optique biréfringente. Cette contrainte se traduit par une rotation des axes de polarisation de la fibre, c'est-à-dire que l'on crée un point de couplage sur la fibre optique. Dans ce cas, il se produit au point de couplage un transfert d'énergie d'un axe de polarisation P1 vers un axe orthogonal P2, l'axe P1 étant de même direction que l'axe PE de polarisation en amont, et en aval de l'élément "contracté" 4B on a une polarisation PS1 de même direction que PE, et une polarisation orthogonale PS2 retardée.

En-dessous de la température de transition, le matériau AMF revient dans sa phase martensitique, aisément déformable. En utilisant l'énergie induite par le retour de la fibre optique à son diamètre initial, l'hélice ou l'anneau en AMF retrouve le diamètre "appris" lors de sa fabrication, ce qui lui fait relâcher les contraintes exercées sur la fibre optique. Par conséquent, la formation du point de couplage est réversible. On peut donc soit supprimer le point de couplage, soit le déplacer. Bien entendu, il en est de même pour tous les points de couplage PC1, PC2, ...

Selon un premier mode de réalisation de l'invention, on réalise un système multi-capteurs à l'aide d'au moins une fibre optique le long de laquelle on dispose plusieurs hélices identiques en AMF telles que celle décrite ci-dessus, déterminant chacune un point de couplage. L'adressage et la lecture des capteurs répartis le long de la fibre optique 2 et délimités par ces points de couplage sont effectués de manière connue en soi par interférométrie ou polarimétrie en reliant, comme précisé ci-dessus, une extrémité de la fibre 2 à une source lumineuse 1, et l'autre extrémité à un interféromètre 3, par exemple de type Michelson. Il en est de même pour tous les autres modes de réalisation de l'invention.

Selon un autre mode de réalisation de l'invention, les hélices ou anneaux en AMF ont des compositions différentes, et donc des températures de transition différentes. On constitue ainsi un système multi-capteurs à capteurs répartis. Ces capteurs permettent alors de suivre l'évolution de la contrainte mécanique mesurée en fonction de la température, s'ils sont tous soumis à la même contrainte. On peut également corriger les valeurs mesurées par ces capteurs afin de rendre les mesures indépendantes des variations de températures auxquelles sont soumis les différents capteurs.

Selon un autre mode de réalisation de l'invention, chaque point de couplage est déterminé par une hélice en AMF à gradient de composition. Par exemple, la composition du matériau AMF peut être constante le long d'une spire et être différente pour la spire suivante, et ainsi de suite. On peut alors mesurer les variations de température auxquelles est soumise chaque hélice en mesurant la variation de l'intensité d'énergie lumineuse due à une variation de la contrainte appliquée par l'hélice à la fibre optique par suite d'un nombre variable de spires comprimant la fibre optique. On peut généralement mesurer une dizaine d'intensités lumineuses différentes pour un même point de couplage. On peut donc disposer en chaque point de couplage une hélice à spires de dix compositions différentes, environ.

Selon un exemple de réalisation de l'invention, une hélice en AMF est réalisée à partir d'un fil en AMF d'un diamètre d'environ 60 µm bobiné sur une fibre optique d'un diamètre d'environ 250 µm. L'alliage AMF est par exemple de type Cu-Al-Ni, Cu-Al-Zn, ou Ni-Ti. La longueur de l'hélice est alors inférieure à 1 mm et l'hélice comporte une dizaine de spires jointives.

Les applications du dispositif de l'invention sont nombreuses, en particulier dans les cas où l'on utilisait déjà des fibres optiques à points de couplage fixes et irréversibles. L'invention permet, dans ces cas, de modifier les emplacements des points de couplage.

En plus, l'invention permet de tenir compte des différents effets de la température et de corriger en conséquence les mesures de contraintes mécaniques et/ou de mesurer en plus (avec une précision relativement peu élevée) les températures auxquelles sont soumis les différents capteurs.

Parmi les nombreuses applications, on peut citer la détection d'échauffements localisés, la détection d'incendie, la mesure locale de température dans des circuits électroniques, en particulier des circuits à haute densité et forte puissance.

On peut également inclure une fibre optique équipée des dispositifs AMF de l'invention dans une structure composite, pour constituer des capteurs d'endommagement de cette structure.

Bien entendu, il est possible de commander sélectivement par effet Joule les éléments en AMF pour configurer à la demande différents tronçons de la fibre optique, pour rendre le système relativement indépendant de la température ambiante. A cet effet, on relie sélectivement un générateur électrique de puissance à l'un ou à plusieurs des éléments en AMF, pour les faire passer à l'état "dilaté" ou "contracté" selon le cas, leur température de transition étant choisie en conséquence.

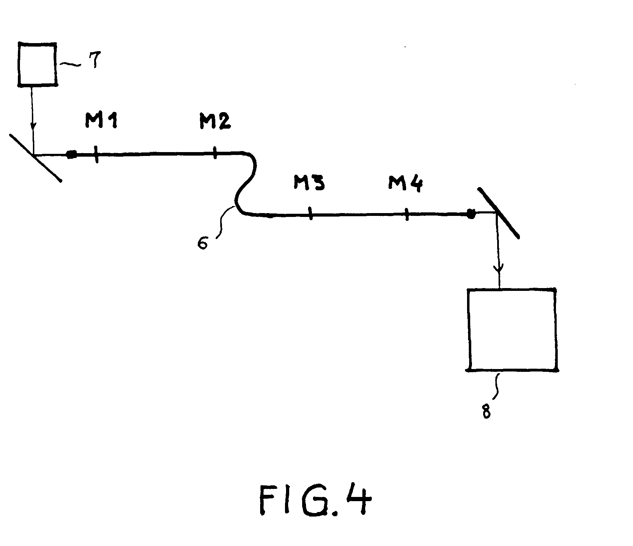

On a schématiquement représenté en figure 4 un capteur 5 principalement destiné à mesurer des variations de dimensions (allongements, contractions...), en tenant compte de la température du lieu de mesure.

Le capteur 5 comporte une fibre optique 6, monomode et biréfringente. Cette fibre 6 peut par exemple être fixée sur une structure (fuselage, aile d'avion, ...) dont on veut déterminer les déformations en différentes zones, dans différentes directions. Bien entendu, le parcours de la fibre 6 sur la structure en question n'est pas nécessairement linéaire, et peut être même très sinueux, en fonction des dispositions relatives des différentes zones de mesure.

La fixation de la fibre 6 sur la structure s'effectue à l'aide d'anneaux ou d'hélices en AMF, du type décrit ci-dessus. Ces anneaux ou hélices sont fixés de façon appropriée (collage, soudage, ...) sur la structure, la fibre pouvant être introduite dans ces anneaux ou hélices avant ou après leur fixation sur la structure. Ces anneaux ou hélices sont généralement pris par deux pour définir à chaque fois un intervalle de mesure, comme par exemple ceux disposés aux points M1 et M2 d'une part, et aux points M3 et M4 d'autre part. Dans les intervalles M1-M2 et M3-M4, la fibre 6 est tendue, et en-dehors de ces intervalles, son parcours est quelconque. Cependant, les anneaux ou hélices peuvent également être pris par trois ou plus pour définir des intervalles de mesure contigus. La mise en place de la fibre optique dans les anneaux ou hélices aux points M1 à M4 se fait à une température de émise en place" correspondant à l'état "dilaté" des anneaux ou hélices, puis la fibre est tendue, de toute façon appropriée, dans les différents intervalles de mesure, et on fait passer la température des anneaux ou hélices de l'autre côté de la température de transition du matériau AMF par rapport à ladite température de mise en place, ce qui fait passer les anneaux ou hélices à l'état "contracté", les éléments en AMF serrent fortement la fibre 6, qui reste tendue au moins dans les intervalles de mesure.

Une extrémité de la fibre 6 est associée à une source 7, par exemple une diode superluminescente, et son autre extrémité est associée à un interféromètre 8.

Avec l'interféromètre 8, on détermine au repos, de façon connue en soi, les longueurs L1, L2 des intervalles M1-M2 et M3-M4. Puis, la structure portant la fibre 6 est soumise aux différents essais prévus, et on détermine avec l'interféromètre 8 les variations éventuelles de ces intervalles: L1+ΔL1 et L2+ΔL2 (en valeurs algébriques). De façon avantageuse, on peut disposer à chaque point de mesure (M1 à M4) plusieurs anneaux ou hélices en AMF ayant des températures de transition différentes. Ainsi, on peut connaître avec une bonne approximation la température à laquelle est soumise la fibre optique dans la zone de mesure, et donc discriminer la variation de longueur de la fibre due à la variation éventuelle de température de celle due aux contraintes subies par la structure.

En résumé, le dispositif de l'invention permet de réaliser de façon simple des points de couplage de polarisation, et, simultanément de créer des capteurs de température, et ce, pour la plupart des types de fibres optiques biréfringentes. Les températures de fonctionnement de tels capteurs peuvent être situées dans une large fourchette de valeurs (-100°C à +200°C environ, actuellement). Dans tous les cas, les points de couplage sont réversibles, sans endommager la fibre optique.- Dans le cas de mesures de variations de longueurs, le dispositif de l'invention présente, par rapport aux dispositifs à jauges de contraintes les avantages suivants : insensibilité aux perturbations électromagnétiques, et à l'environnement, et utilisation d'une seule fibre pour un grand nombre de points de mesure (au lieu d'un grand nombre de fils électriques).

## Revendications

1. Capteur à fibre optique, dont au moins une partie fait office de capteur de grandeur physique se traduisant par une contrainte exercée sur la fibre, cette fibre optique (2) coopérant avec une source de lumière (1), un dispositif de lecture optique (3), et un élément en alliage à mémoire de forme (4) disposé sur la fibre optique, cet élément à mémoire de forme étant dimensionné et éduqué de façon que lorsqu'il est porté à des températures situées d'une part de la température de transition du matériau le constituant, il n'exerce pratiquement aucune contrainte sur la fibre, et que lorsqu'il est porté à des températures situées d'autre part de ladite température de transition, il exerce sur la fibre une contrainte mesurable par ledit dispositif de lecture, caractérisé par le fait que la fibre optique est une fibre à haute biréfringence, qu'il comporte plusieurs éléments en alliage à mémoire de forme répartis sur la fibre optique, que la mesure effectuée par le dispositif de lecture optique est une mesure interférométrique ou polarimétrique, et que la contrainte que ces éléments exercent sur la fibre est une contrainte radiale quasi isotrope.

2. Capteur selon la revendication 1, caractérisé par le fait qu'il comporte plusieurs éléments en alliage à mémoire de forme répartis le long de la fibre optique, et qu'ils ont tous la même température de transition.

3. Capteur selon la revendication 1, caractérisé par le fait qu'il comporte plusieurs éléments en alliage à mémoire de forme répartis le long de la fibre optique, et qu'ils ont des températures de transition différentes.

4. Capteur selon l'une des revendications précédentes, caractérisé par le fait que le dispositif de lecture détecte le déplacement de pics d'interférences dû à la variation de longueur de la fibre optique par suite de variations de température auxquelles elle est soumise, et que cette détection sert à corriger les mesures de grandeur physiques normalement effectuées par le capteur.

5. Capteur selon l'une des revendications précédentes, caractérisé par le fait que chaque élément en alliage à mémoire de forme a une forme d'hélice tubulaire.

6. Capteur selon la revendication 5, caractérisé par le fait que l'hélice est en alliage à mémoire de forme à gradient de composition.

7. Capteur selon l'une des revendications 5 ou 6, caractérisé par le fait que chaque élément en alliage à mémoire de forme est réalisé à partir d'un fil ayant un diamètre d'environ 60 µm, et comporte environ dix spires jointives.

8. Capteur selon l'une des revendications 1 à 4, caractérisé par le fait que chaque élément en alliage à mémoire de forme a une forme annulaire.

9. Capteur selon l'une des revendications 1 à 4, caractérisé par le fait que chaque élément en alliage à mémoire de forme a une forme tubulaire.

10. Capteur selon l'une des revendications précédentes, caractérisé par le fait que les éléments en AMF sont reliés sélectivement à un générateur électrique de puissance.

11. Capteur selon l'une des revendications précédentes, caractérisé par le fait qu'au moins une partie des éléments en AMF (M1 à M4) est fixée sur une structure dont on mesure les déformations, et que la fibre optique est tendue entre les éléments définissant les zones de mesure.

## Patentansprüche

1. Sensor mit Lichtleitfaser, wovon wenigstens ein Teil als Sensor einer physikalischen Größe dient, die sich aus einer auf die Faser ausgeübten Beanspruchung ergibt, wobei diese Lichtleitfaser (2) mit einer Lichtquelle (1), einer optischen Lesevorrichtung (3) und einem Element aus einer formerhaltenden Legierung (4), die an der Lichtleitfaser angeordnet ist, zusammenwirkt, wobei dieses Element mit Formerhaltung so dimensioniert und beschaffen ist, daß es, wenn es auf Temperaturen gehalten wird, die auf einer Seite der Umwandlungstemperatur des es bildenden Materials liegen, im wesentlichen keine Beanspruchung auf die Faser ausübt, und daß es, wenn es auf Temperaturen gehalten wird, die auf der anderen Seite der Umwandlungstemperatur liegen, auf die Faser eine von der Lesevorrichtung meßbaren Beanspruchung ausübt, dadurch gekennzeichnet, daß die Lichtleitfaser eine Faser mit hoher Doppelbrechung ist, daß sie mehrere Elemente aus einer formerhaltenden Legierung enthält, die auf der Lichtleitfaser verteilt sind, daß die von der optischen Lesevorrichtung ausgeführte Messung eine interferometrische oder polarimetrische Messung ist und daß der Zwang, den diese Elemente auf die Faser ausüben, eine quasiisotrope radiale Beanspruchung ist.

2. Sensor nach Anspruch 1, dadurch gekennzeichnet, daß er mehrere Elemente aus einer formerhaltenden Legierung enthält, die längs der Lichtleitfaser verteilt sind und alle die gleiche Umwandlungstemperatur besitzen.

3. Sensor nach Anspruch 1, dadurch gekennzeichnet, daß er mehrere Elemente aus einer formerhaltenden Legierung enthält, die längs der Lichtleitfaser verteilt sind und unterschiedliche Umwandlungstemperaturen besitzen.

4. Sensor nach einem der vorangehenden Ansprüche, dadurch gekennzeichnet, daß die Lesevorrichtung die Verschiebung von Interferenzpeaks erfaßt, die durch die Änderung der Länge der Lichtleitfaser infolge von Temperaturänderungen, denen sie unterworfen ist, bedingt sind, und daß diese Erfassung dazu dient, die Messungen der physikalischen Größe, die normalerweise vom Sensor ausgeführt werden, zu korrigieren.

5. Sensor nach einem der vorangehenden Ansprüche, dadurch gekennzeichnet, daß jedes Element aus einer formerhaltenden Legierung eine röhrenförmige Schraubenlinienform besitzt.

6. Sensor nach Anspruch 5, dadurch gekennzeichnet, daß die Schraubenlinie aus einer formerhaltenden Legierung mit Zusammensetzungsgradienten ist.

7. Sensor nach einem der Ansprüche 5 oder 6, dadurch gekennzeichnet, daß jedes Element aus einer formerhaltenden Legierung anhand eines Drahts verwirklicht ist, der einen Durchmesser von ungefähr 60 µm besitzt und ungefähr zehn nebeneinanderliegende Windungen enthält.

8. Sensor nach einem der Ansprüche 1 bis 4, dadurch gekennzeichnet, daß jedes Element aus einer formerhaltenden Legierung eine Ringform besitzt.

9. Sensor nach einem der Ansprüche 1 bis 4, dadurch gekennzeichnet, daß jedes Element aus einer formerhaltenden Legierung eine Röhrenform besitzt.

10. Sensor nach einem der vorangehenden Ansprüche, dadurch gekennzeichnet, daß die Elemente aus AMF selektiv mit einem Generator für elektrische Leistung verbunden sind.

11. Sensor nach einem der vorangehenden Ansprüche, dadurch gekennzeichnet, daß wenigstens ein Teil der Elemente aus AMF (M1 bis M4) an einer Struktur befestigt ist, deren Verformungen gemessen werden, und daß die Lichtleitfaser zwischen den Elementen, die die Meßzonen definieren, gespannt ist.

## Claims

1. Sensor of the optical fibre type, at least part of which acts as a sensor of a physical quantity manifested by a stress exerted on the fibre, this optical fibre (2) interacting with a light source (1), an optical read device (3), and an element (4) made of a shape-memory alloy arranged on the optical fibre, this shape-memory element being designed and taught so that, when it is at temperatures lying on one side of the transition temperature of the constituent material it exerts virtually no stress on the fibre, and when it is at temperatures lying on the other side of the said transition temperature it exerts on the fibre a stress which can be measured by the said read device, characterized in that the optical fibre is a high-birefringence fibre, in that the sensor includes several elements made of a shape-memory alloy which are distributed along the optical fibre, in that the measurement made by the optical read device is an interferometric or polarimetric measurement and in that the stress that these elements exert on the fibre is a quasi-isotropic radial stress.

2. Sensor according to Claim 1, characterized in that it includes several elements made of a shape-memory alloy which are distributed along the optical fibre and in that they all have the same transition temperature.

3. Sensor according to Claim 1, characterized in that it includes several elements made of a shape-memory alloy which are distributed along the optical fibre and in that they have different transition temperatures.

4. Sensor according to one of the preceding claims, characterized in that the read device detects the interference-peak shift due to the length variation of the optical fibre as a result of temperature variations to which it is subjected and in that this detection serves to correct the measurements of physical quantities normally performed by the sensor.

5. Sensor according to one of the preceding claims, characterized in that each element made of a shape-memory alloy has the shape of a tubular helix.

6. Sensor according to Claim 5, characterized in that the helix is made of a shape-memory alloy having a composition gradient.

7. Sensor according to one of Claims 5 and 6, characterized in that each element made of a shape-memory alloy is produced from a wire having a diameter of approximately 60 µm and includes approximately ten touching turns.

8. Sensor according to one of Claims 1 to 4, characterized in that each element made of a shape-memory alloy has a ring shape.

9. Sensor according to one of Claims 1 to 4, characterized in that each element made of a shape-memory alloy has a tubular shape.

10. Sensor according to one of the preceding claims, characterized in that the SMA elements are connected selectively to an electric power generator.

11. Sensor according to one of the preceding claims, characterized in that at least part of the SMA elements (M1 to M4) is fixed to a structure, the deformations of which are measured, and in that the optical fibre is held taut between the elements defining the measurement zones.
